# EUROPEAN PATENT APPLICATION

(11) **EP 4 306 984 A1**
(43) Date of publication of application: **17.01.2024**
(21) Application number: 22184585.2
(22) Date of filing: 13.07.2022
(51) Int. Cl.: G01S 5/02, G01S 19/46, G01S 19/48, G01S 19/39

(54) **METHOD OF GEOGRAPHIC POSITIONING OF A RECEIVER DEVICE, AND RECEIVER DEVICE**

(71) Applicant: Rohde & Schwarz GmbH & Co. KG, 81671 München (DE)
(72) Inventor: Taga, Aziz, 81241 Munich (DE)
(74) Representative: Rupp, Christian

(57) **Abstract**

Disclosed is a method (1) of geographic positioning of a receiver device (2). The method (1) comprises receiving (11) a plurality of positioning and timing information of associated positioning and timing information sources; and determining (12) a geographic position of the receiver device (2) in accordance with the plurality of positioning and timing information. This provides a universal, reliable and flexible positioning, navigation and timing solution.

## Description

### Technical Field

The present disclosure relates generally to the field of geographic positioning, and more particularly to a method of geographic positioning of a receiver device and to the receiver device.

### Background Art

Since the very first appearance of global navigation satellite systems (GNSS) such as GPS, GLONASS, Galileo, BeiDou and others, the topic of positioning became relevant for many sectors like finance transactions, electricity and mobility. In connection with fifth-generation (5G) cellular communication services, accurate and reliable positioning has become even more important and critical. For instance, self-driving cars are intolerant to inaccurate and/or unreliable positioning. In fact, GNSS-based positioning may be jammed or spoofed easily, whereas 5G-based positioning implies a high total cost of ownership (TCO) due to a requisite synchronization of an increasing number of base stations. Moreover, a subscriber identity module (SIM) should be always present in order to be able to use the positioning service.

### Summary

It is an object to overcome these and other drawbacks of the prior art. In particular, it is an object to provide a geographic positioning of high accuracy, low TCO, and with no need for a subscription.

The foregoing and other objects are achieved by the features of the independent claims. Further implementation forms are apparent from the dependent claims, the description and the figures.

According to a first aspect, a method of geographic positioning of a receiver device is provided. The method comprises receiving a plurality of positioning and timing information of associated positioning and timing information sources; and determining a geographic position of the receiver device in accordance with the plurality of positioning and timing information.

The method may further comprise transmitting a positioning and timing information comprising the determined geographic position of the receiver device.

The associated positioning and timing information sources may comprise one or more of: a satellite navigation service, a cellular communication service, at least three transmitters of a cellular or terrestrial broadcast service, and a device-to-device, D2D, communication service.

The determining may comprise multilaterating the at least three transmitters, the multilateration being based on one or more of: a time difference of arrival, TDOA, between respective pairs of the at least three transmitters, and an angle of arrival, AOA, of a respective transmitter of the at least three transmitters.

The determining may comprise deriving a geographic position of a fixed or mobile landmark from map updates being transmitted periodically by the terrestrial broadcast service.

The determining may comprise fusing the positioning and timing information of at least two of the associated positioning and timing information sources.

The fusing may comprise inferring one or more of the at least two of the associated positioning and timing information sources in accordance with a first machine learning technique.

The first machine learning technique may comprise a K-Nearest Neighbors, KNN, classification.

The determining may comprise prioritizing an absolute positioning and timing information of the plurality of positioning and timing information over any other absolute positioning and timing information of the plurality of positioning and timing information in accordance with an accuracy of the respective absolute positioning and timing information.

The determining may comprise assessing the accuracy of the respective absolute positioning and timing information periodically.

The assessing may comprise learning a predictive model of the accuracy of the respective absolute positioning and timing information in accordance with a second machine learning technique; and predicting the accuracy of the respective absolute positioning and timing information in accordance with the respective predictive model.

The second machine learning technique may comprise linear regression.

According to a second aspect, a receiver device is provided. The receiver device comprises a processing unit, being configured to: receive a plurality of positioning and timing information of associated positioning and timing information sources; and determine a geographic position of the receiver device in accordance with the plurality of positioning and timing information.

The processing unit may further be configured to perform the method of the first aspect or any of its implementations.

### Advantageous Effects

The present disclosure provides a universal, reliable and flexible positioning, navigation and timing (PNT) solution, which may be based on a standardized 5G broadcast solution to enhance and backup GNSS. The resulting geographic positioning attains high accuracy and low TCO without a requisite subscription.

The technical effects and advantages described above equally apply to the method of geographic positioning of a receiver device and to the receiver device having corresponding features.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
FIG. 1 illustrates a method in accordance with the present disclosure; and
FIG. 2 schematically illustrates a receiver device in accordance with the present disclosure.

### Detailed Descriptions of Drawings

In the following description, reference is made to the accompanying drawings, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

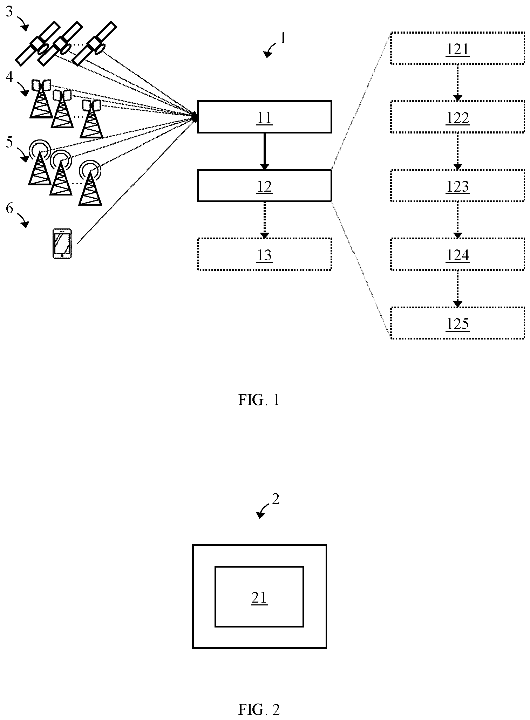

FIG. 1 illustrates a method 1 in accordance with the present disclosure.

The method 1 is designed for geographic positioning of a receiver device 2, such as a vehicle/car or a smart phone, for example.

As used herein, geographic positioning (i.e., geopositioning) may refer to a process of determining or estimating a geographic position of an object. Geopositioning may yield a geographic coordinate such as latitude and longitude in accordance with a reference frame such as the World Geodetic System (WGS84).

The method 1 comprises a step of receiving 11 a plurality of positioning and timing information of associated positioning and timing information sources.

With reference to FIG. 1, the associated positioning and timing information sources may comprise one or more of: a satellite navigation service 3, a cellular communication service 4, at least three transmitters of a cellular or terrestrial broadcast service 5, and a device-to-device, D2D, communication service 6.

The satellite navigation service 3 may comprise a GNSS such as GPS, GLONASS, Galileo, BeiDou and others, and may provide positioning and timing information for processing by a GNSS receiver of the receiver device 2.

The cellular communication service 4 may comprise a 5G communication service, for example, and may provide positioning and timing information derived by means of a Location Management Function (LMF) of the underlying 5G cellular network.

The cellular broadcast service 5 may comprise a 5G broadcast (5G-BC) service, for example, and may provide positioning and timing information by means of a Further evolved Multimedia Broadcast Multicast Service (FeMBMS) of the underlying 5G cellular network.

The terrestrial broadcast service 5 may comprise a digital video broadcasting service such as DVB-T2, or a digital audio broadcasting service such as DAB+.

The method 1 further comprises a step of determining 12 a geographic position of the receiver device 2 in accordance with the plurality of positioning and timing information.

The satellite navigation service 3 may provide a positioning and timing information suitable for absolute positioning by the GNSS receiver of the receiver device 2.

The cellular communication service 4 may provide a positioning and timing information suitable for absolute positioning by the LMF of the underlying 5G cellular network.

The cellular or terrestrial broadcast service 5 may provide a positioning and timing information suitable for relative positioning by the GNSS receiver of the receiver device 2, such as GNSS correction data (e.g. PPP-RTK).

As used herein, absolute positioning may refer to direct determination of an unknown geographic position of a single receiver measuring its range to a minimum of *N+1* transmitters (i.e., satellites, base stations, broadcasting towers) simultaneously for an *N*-dimensional positioning, whereas relative positioning may refer to determination of the unknown geographic position based on a minimum of two receivers wherein one of them occupies a known position.

In case of the cellular or terrestrial broadcast service 5, the determining 12 may comprise multilaterating 121 the at least three transmitters, the multilateration being based on one or more of: a time difference of arrival, TDOA, between respective pairs of the at least three transmitters, and an angle of arrival, AOA, of a respective transmitter of the at least three transmitters.

As used herein, multilateration may refer to a technique for determining an unknown geographic position (of the receiver device 2) based on measurement of times of arrival (TOAs) of energy waves traveling from multiple transmitters having synchronized clocks.

As used herein, TOAs may refer to absolute time instants when an energy wave emanating from a transmitter reaches the receiver device 2.

As used herein, TDOA may refer to a difference between a pair of TOAs.

As used herein, an AOA may refer to an angle enclosed between a boresight of a directional antenna and a propagation direction of a radio wavefront impinging on said directional antenna.

The determining 12 may comprise deriving 122 a geographic position of a fixed or mobile landmark from map updates being transmitted periodically, for example every second, by the terrestrial broadcast service.

As used herein, a map or a map update may refer to one or more data records respectively defining a geographic position of a landmark.

Starting from a pre-calculated absolute position, the receiver device 2, e.g. vehicle, can further use a voice recognition algorithm in order to understand its live relative positioning from a voice guided map (e.g. and/or regular radio announcement). With those coordinates, the receiver device 2 may use any radars and/or cameras in order to cross-check its relative position in relation to said geographic positions of the fixed or mobile landmarks. The receiver device 2 may even extract the geographic position of an existing nearby device like a smartphone as a reference. Based on the pre-calculated absolute position, the receiver can either keep it or even break it down based on a more
accurate information coming from the relative position calculation.

The determining 12 may comprise fusing 123 the positioning and timing information of at least two of the associated positioning and timing information sources.

As used herein, fusing may refer to a process of combining positioning and timing information derived from disparate sources such that the resulting fused positioning and timing information has less uncertainty than would be possible when these sources were considered individually. For example, a more accurate fused positioning and timing information may be obtained by a linear combination of a plurality of positioning and timing information weighted by their respective noise variances (inverse-variance weighting).

In case of a D2D communication service 6, such as a PC5 side-link communication path, receiver devices 2 would regularly share their positioning experiences with one another.

The fusing 123 may therefore comprise inferring one or more of the at least two of the associated positioning and timing information sources in accordance with a first machine learning technique.

The first machine learning technique may comprise a K-Nearest Neighbors, KNN, classification.

The determining 12 may comprise prioritizing 124 an absolute positioning and timing information of the plurality of positioning and timing information over any other absolute positioning and timing information of the plurality of positioning and timing information in accordance with an accuracy of the respective absolute positioning and timing information, or in accordance with a respective signal strength (e.g., C/N). For example, the prioritizing 124 may comprise considering one associated positioning and timing source as a primary source and another associated positioning and timing source as a backup source.

The determining 12 may comprise assessing 125 the accuracy of the respective absolute positioning and timing information periodically. For example, the receiver device 2 may verify the accuracy of the respective absolute positioning and timing information and decide on a primary one of the associated positioning and timing sources every 5 seconds.

The assessing 125 may comprise learning a predictive model of the accuracy of the respective absolute positioning and timing information in accordance with a second machine learning technique; and predicting the accuracy of the respective absolute positioning and timing information in accordance with the respective predictive model.

The second machine learning technique may comprise linear regression.

With all the previous steps, the receiver device 2 is trained and ready to make specific decisions. The latter may e.g. use a third machine learning technique, such as reinforcement learning based on a Markov Decision Process. The receiver device 2 is exposed to an environment where it continually trains itself using trial and error logic as it learns from past experience and tries to capture the best possible knowledge to calculate the most accurate geographic position based on all previous provider inputs.

The method 1 may further comprise transmitting 13 a positioning and timing information comprising the determined geographic position of the receiver device 2, e.g. for reception 11 by any other receiver devices 2.

FIG. 2 schematically illustrates a receiver device 2 in accordance with the present disclosure.

The receiver device 2 comprises a processing unit 21.

In accordance with the method 1 of the first aspect, the processing unit 21 is configured to receive 11 a plurality of positioning and timing information of associated positioning and timing information sources, and to determine 12 a geographic position of the receiver device 2 in accordance with the plurality of positioning and timing information.

Particularly, the processing unit 21 may further be configured to perform various implementations of the method 1 of the first aspect.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A method (1) of geographic positioning of a receiver device (2), comprising
- receiving (11) a plurality of positioning and timing information of associated positioning and timing information sources; and
- determining (12) a geographic position of the receiver device (2) in accordance with the plurality of positioning and timing information.

2. The method (1) of claim 2, further comprising
- transmitting (13) a positioning and timing information comprising the determined geographic position of the receiver device (2).

3. The method (1) of claim 1 or claim 2,
the associated positioning and timing information sources comprising one or more of:
a satellite navigation service (3);
a cellular communication service (4);
at least three transmitters of a cellular or terrestrial broadcast service (5); and
a device-to-device, D2D, communication service (6).

4. The method (1) of claim 3,
the determining (12) comprising multilaterating (121) the at least three transmitters, the multilateration being based on one or more of:
a time difference of arrival, TDOA, between respective pairs of the at least three transmitters, and
an angle of arrival, AOA, of a respective transmitter of the at least three transmitters.

5. The method (1) of claim 3 or claim 4,
the determining (12) comprising deriving (122) a geographic position of a fixed or mobile landmark from map updates being transmitted periodically by the terrestrial broadcast service.

6. The method (1) of any one of the preceding claims,
the determining (12) comprising fusing (123) the positioning and timing information of at least two of the associated positioning and timing information sources.

7. The method (1) of claim 6,
the fusing (123) comprising inferring one or more of the at least two of the associated positioning and timing information sources in accordance with a first machine learning technique.

8. The method (1) of claim 7,
the first machine learning technique comprising a K-Nearest Neighbors, KNN, classification.

9. The method (1) of any one of the preceding claims,
the determining (12) comprising prioritizing (124) an absolute positioning and timing information of the plurality of positioning and timing information over any other absolute positioning and timing information of the plurality of positioning and timing information in accordance with an accuracy of the respective absolute positioning and timing information.

10. The method (1) of claim 9,
the determining (12) comprising assessing (125) the accuracy of the respective absolute positioning and timing information periodically.

11. The method (1) of claim 10,
the assessing (125) comprising learning a predictive model of the accuracy of the respective absolute positioning and timing information in accordance with a second machine learning technique; and predicting the accuracy of the respective absolute positioning and timing information in accordance with the respective predictive model.

12. The method (1) of claim 11,
the second machine learning technique comprising linear regression.

13. A receiver device (2), comprising
a processing unit (21), being configured to
- receive (11) a plurality of positioning and timing information of associated positioning and timing information sources; and
- determine (12) a geographic position of the receiver device (2) in accordance with the plurality of positioning and timing information.

14. The receiver device (2) of claim 13,
the processing unit (21) further being configured to perform the method (1) of any one of the claims 2 to 12.
